# EUROPÄISCHE PATENTSCHRIFT

(11) **EP 1 825 796 B1**
(45) Veröffentlichungstag und Bekanntmachung des Hinweises auf die Patenterteilung: **09.09.2009**
(21) Anmeldenummer: 06003611.8
(22) Anmeldetag: 22.02.2006
(51) Int. Cl.: A47J 39/00

(54) **Vorrichtung zum Erwärmen von vorbereiteten Speisen**
Device for heating prepared foods
Appareil de chauffage pour plats préparés

(43) Veröffentlichungstag der Anmeldung: 29.08.2007
(73) Patentinhaber: Janssen, Kai, 26188 Edewecht (DE)
(72) Erfinder: Janssen, Kai, 26188 Edewecht (DE)
(74) Vertreter: Niebuhr, Heinrich

(56) Entgegenhaltungen:
- GB-A- 2 066 441
- GB-A- 2 165 041
- US-A- 3 199 579
- US-A1- 2005 028 543

## Beschreibung

Die Erfindung betrifft eine Vorrichtung zum Erwärmen von vorbereiteten Speisen.

Die Lieferung von fertigen warmen Mahlzeiten insbesondere für ältere Menschen zeigt ein stetiges Wachstum. Normalerweise werden die Speisen in einer Großküche hergestellt, gekocht und dann in Warmhaltebehältern zu den Kunden geliefert. Dabei kann, insbesondere bei der Belieferung zahlreicher Kunden, der Zeitraum zwischen dem Kochen bzw. Erwärmen und der Auslieferung an den Kunden sehr groß werden. Dabei besteht nicht nur die Gefahr, dass die Speisen wieder abkühlen. Vielmehr tritt auch ein deutlicher Qualitätsverlust ein.

Die Aufgabe der Erfindung besteht in der Schaffung einer Vorrichtung, mit der die Kunden mit Mahlzeiten bedient werden können, die nur relativ kurze Zeit vor der Lieferung erwärmt worden sind. Aus der US-319 9 579 ist eine solche Vorrichtung bekannt.

Die erfindungsgemäße Lösung besteht darin, dass die Vorrichtung mehrere unabhängig voneinander betreibbare, mit Heizeinrichtungen versehene Ofenkammern und mindestens eine Kühlkammer aufweist, die mit einer Tür oder Klappe verschließbar und aneinander angrenzend angeordnet sind, und dass zwischen der Kühlkammer und der daran angrenzenden Ofenkammer Hohlräume vorgesehen sind, durch die mit Hilfe von Gebläseeinrichtungen Luft hindurchleitbar ist.

Eine solche Vorrichtung kann ohne weiteres so ausgebildet werden, dass sie in einem Kraftfahrzeug installiert werden kann. Die vorbereiteten gekühlten oder tiefgefrorenen Gerichte können dabei vor Beginn der Auslieferung in den Ofenkammern untergebracht werden. In der Kühlkammer können Reservegerichte oder aber Beilagen aufbewahrt werden, die gekühlt verzehrt werden sollen. Die Ofenkammern und die Kühlkammer werden dabei mit einer Tür oder Klappe verschlossen, nachdem die Tabletts mit den Mahlzeiten eingesetzt worden sind. Jede Ofenkammer wird dabei zum optimalen Zeitpunkt erhitzt. Zweckmäßigerweise wird man die erste Ofenkammer in einem Zeitraum vor der ersten Auslieferung in Betrieb setzen, der der Erwärmungszeit oder Koch- oder Garzeit entspricht. Die zweite und, falls vorhanden, weitere Kammern werden dann entsprechend zu einem Zeitpunkt in Betrieb gesetzt, dass auch die Kunden, die aus den weiteren Kammern beliefert werden, Mahlzeiten erhalten, die zwar einerseits ausreichend gegart oder erwärmt sind, andererseits aber nicht übermäßig lange warm gehalten worden sind.

Die Vorrichtung kann wie erwähnt sehr kompakt ausgebildet werden, so dass sie in einem Kraftfahrzeug installiert werden kann. Damit nicht eine sehr voluminöse und damit raumeinnehmende Isolierung zwischen der Kühlkammer und der daran angrenzenden Ofenkammer vorhanden sein muss, sind zwischen diesen beiden Kammern Hohlräume vorgesehen, durch die Luft geblasen wird, um so Wärme von der Wand der Ofenkammer nach außen abzuführen. Es ist dann nur noch eine wesentlich weniger aufwendige Isolierung der Kühlkammer gegen die angrenzende Ofenkammer erforderlich.

Zweckmäßigerweise sind die Kammern nebeneinander angeordnet. Als besonders zweckmäßig hat es sich erwiesen, wenn drei Ofenkammern vorgesehen sind.

Zweckmäßigerweise wird man mit dem Beheizen bei der Ofenkammer beginnen, die am weitesten von der Kühlkammer entfernt ist. Man könnte daran denken, die Ofenkammern gegeneinander nur relativ schlecht zu isolieren, so dass, wenn zum Beispiel die erste Ofenkammer erwärmt wird, die daran anschließende zweite Ofenkammer bereits vorgewärmt wird. Der Vorteil der Energieeinsparung wird aber möglicherweise durch den Nachteil aufgewogen, dass damit die Speisen in der zweiten Kammer früher erwärmt werden, als dies erforderlich oder gewünscht ist. Man wird daher einer zweckmäßigen Ausführungsform auch die Ofenkammern gegeneinander so gut isolieren, dass kaum Wärme von einer Kammer zur nächsten gelangen kann.

Zweckmäßigerweise weisen die Ofenkammern einen beheizbaren Wärmetauscher und ein Umluftgebläse auf. Der Wärmetauscher ist dabei zweckmäßigerweise mit einer Heizeinrichtung in Form einer Brennkammer zum Verbrennen von Kraftstoff versehen. Für die Verbrennung wird Außenluft herangeführt und anschließend in die Umgebung abgeführt. Dadurch wird der Wärmetauscher erwärmt, wobei dann durch das Umluftgebläse die Temperatur in der Ofenkammer auf den gewünschten Wert gebracht werden kann.

Die Heizeinrichtung weist zweckmäßigerweise einen keramischen Glühstift auf, der elektrisch beheizt wird. Die passende Leistung für den Glühstift wird dabei dynamisch bereitgestellt, um den Kraftstoff wirksam zu verbrennen und zum Beispiel starke Qualmbildung zu vermeiden. Als Kraftstoff kann dabei insbesondere Dieselkraftstoff verwendet werden, der aus dem Tank des Fahrzeugs entnommen wird. Bei der anfänglichen Beheizung des Glühstifts können Umgebungsbedingungen oder Parameter berücksichtigt werden wie zum Beispiel die Anfangstemperatur der Brennkammer (kalte oder heiße Brennkammer), Luftfeuchte, Außentemperatur und innerer Widerstand des Glühstifts. Die entsprechenden Größen werden dabei durch Sensoren erfasst und durch einen Mikroprozessor und Systemsoftware verarbeitet.

Die Brennkammer weist vorteilhafterweise ein Gebläse zur Versorgung mit Frischluft und eine Dosierpumpe für die Zuführung des Kraftstoffs auf. Nachdem die Brennkammer ausreichend vorbelüftet ist, wird der Kraftstoff mittels der Dosierpumpe zugeführt und im Bereich des Glühstifts verdampft. Es folgt dann die Zündung. Die Heizleistung der Heizeinrichtung wird über variable Gebläsedrehzahl und/oder Pulsweitenmodulation der Dosierpumpe geregelt. Als führende Größe der Leistungsregelung wird durch Sensoren die Temperaturänderung über die Zeit im Innenraum der Ofenkammern detektiert. Aufgrund dieser Veränderungsgeschwindigkeit arbeitet das System völlig automatisch ergebnisorientiert, das heißt, es spielt keine Rolle, ob in der Ofenkammern zum Beispiel zwei oder zwölf Menüs eingestellt worden sind oder ob man Tiefkühlmenüs (-18° C) oder nur gekühlte Menüs (+4° C) fertiggart. Die Systemsensorik in Verbindung mit der Systemsoftware ermittelt selbstständig und dynamisch die optimale Maximaltemperatur zur schonenden Fertiggarung der Menüs im kleinstmöglichen Zeitfenster mit dem minimalen Energieaufwand pro Menü.

Das Umluftgebläse innerhalb der Ofenkammer ist dabei zweckmä-ßigerweise ein Querstromlüfter.

Damit eine größere Anzahl von Speisen in den Kammern untergebracht werden kann, sind diese zweckmäßigerweise an den Seiten mit schienenförmigen oder aber mit schubladenförmigen Halterungen für die Tabletts der Speisen versehen.

Weiter ist hier zweckmäßig, wenn die Kammern mit Türkontaktschaltern versehen sind. Dies kann einerseits Überwachungszwecken dienen und andererseits auch dazu dienen, bei geöffneter Tür die Beheizung abzuschalten.

Die Steuerung der Vorrichtung geschieht vorteilhafterweise durch einen Mikroprozessor. Zur Kontrolle weist die Vorrichtung zweckmäßigerweise Signallampen und/oder eine Anzeige, insbesondere eine Flüssigkristallanzeige auf, die auch eine Touchfunktion aufweisen kann, so dass die Steuerung der Vorrichtung durch Berühren der Flüssigkristallanzeige erfolgen kann.

Zur Überwachung und Kontrollzwecken ist es zweckmäßig, wenn die Vorrichtung mit Einrichtungen zum Aufzeichnen und Ausgeben der Betriebsdaten, insbesondere Temperaturverlauf und Türöffnungszeiten mit Datum und Uhrzeit versehen ist.

Die Erfindung wird im Folgenden anhand einer vorteilhaften Ausführungsform unter Bezugnahme auf die beigefügten Zeichnungen beschrieben. Es zeigen:
- Fig. 1: die erfindungsgemäße Vorrichtung in einer perspektivischen Darstellung;
- Fig. 2: einen vergrößerten Ausschnitt des in Fig.1 mit einem Kreis markierten Bereichs;
- Fig. 3: die erfindungsgemäße Vorrichtung von hinten;
- Fig. 4: eine Ofenkammer, bei der der obere Teil entfernt ist, von oben; und
- Fig. 5: einen Wärmetauscher, der in der Ofenkammer verwendet wird.

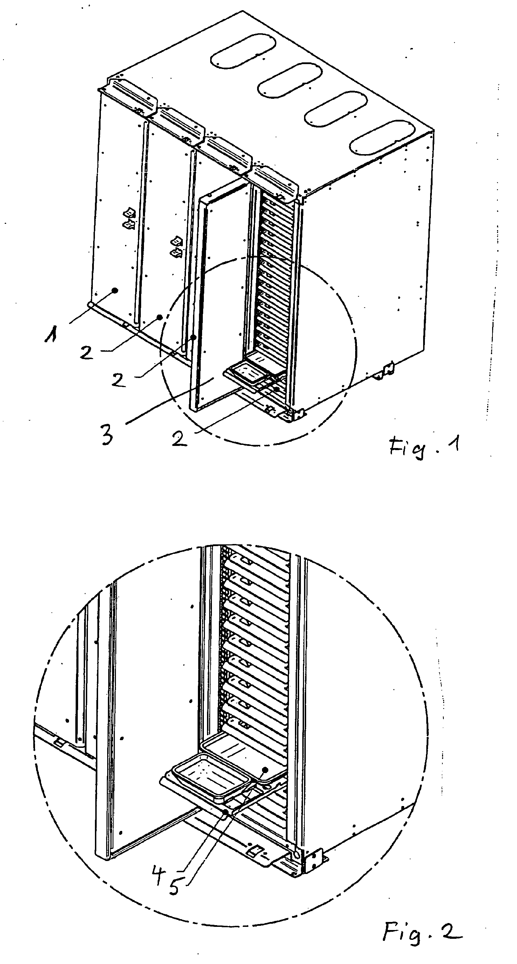

Wie dies in Fig.1 dargestellt ist, weist die Vorrichtung eine Kühlkammer 1 und drei nebeneinander angeordnete Ofenkammern 2 auf. Die in der Figur rechts dargestellte Ofenkammer 2 ist mit geöffneter Tür 3 dargestellt. Man erkennt dort auch, wie dies insbesondere in der vergrößerten Darstellung der Fig.2 gezeigt ist, herausziehbare schubladenähnliche Elemente 4, auf denen die Speisen 5 portioniert gelagert sind.

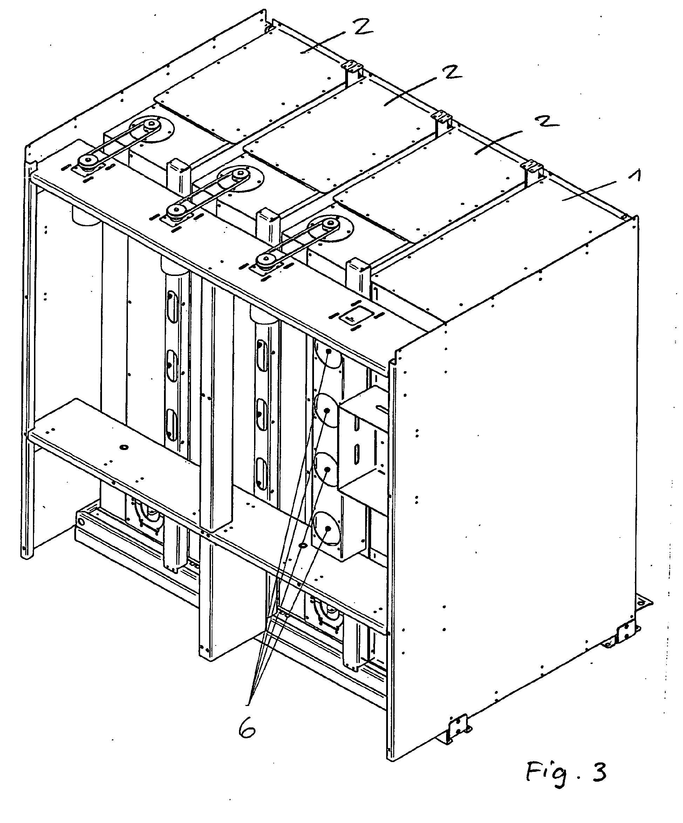

Wie dies in Fig.3 dargestellt ist, sind Gebläse 8 in der Wand zwischen der Kühlkammer 1 und der darin angrenzenden Ofenkammer 2 angeordnet, mit denen Kühlluft durch diese Wand hindurch geblasen wird, um übermäßigen Wärmetransport zur Kühlkammer 1 von der benachbarten Ofenkammer 2 zu verhindern. Dadurch kann die in diesem Bereich notwendige Isolierung wesentlich schwächer ausgestalten werden, als dies ohne die Kühlgebläse 8 nötig wäre.

In den Figuren sind drei Ofenkammern 2 und eine Kühlkammer 1 vorgesehen. Selbstverständlich könnte die Anzahl dieser Kammern auch anders gewählt werden.

Wesentlich ist es aber für die Erfindung, dass voneinander unabhängig betreibbarer Ofenkammern 2 vorgesehen sind, damit diese nacheinander in Betrieb gesetzt werden können, um die Abnehmer mit jeweils frisch erwärmten oder gegarten Speisen zu versorgen.

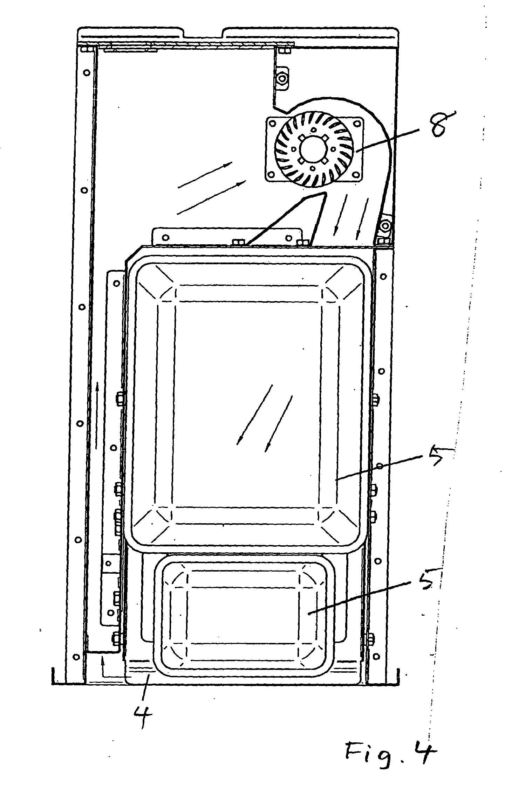

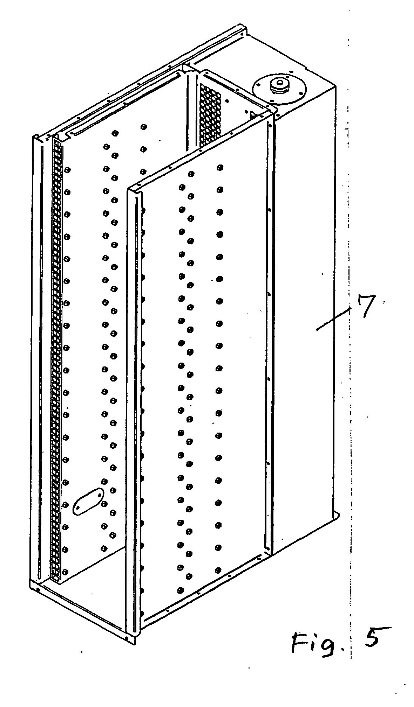

Fig.4 zeigt eine Ofenkammer 2, wobei ein oberer Teil entfernt ist. Man erkennt neben den schubladenähnlichen Elementen 4 und den darauf angeordneten Speisen 5 einen Querstromlüfter 6, der die Luft in Richtung der Pfeile umwälzt. Dieser Querstromlüfter 6 ist in einem Wärmetauscher 7 angeordnet, der in Fig.5 dargestellt ist. Dieser Wärmetauscher 7 weist in den Figuren nicht gezeigte Brennkammern auf, in denen Kraftstoff verbrannt wird. Die für die Verbrennung notwendige Luft wird dabei von außen herangeführt und nach dem Verbrennungsvorgang nach außen abgeführt. Durch den Querstromlüfter 6 wird dann die Luft über den Wärmetauscher und in das Innere der Ofenkammer 2 geleitet.

In den Figuren nicht dargestellt sind Einrichtungen für die Steuerung, wie zum Beispiel Türkontakte, Signallampen, Anzeigen, Bedienungselemente usw.

Wesentlich ist aber, dass die Vorrichtung sehr kompakt ist und ohne Weiteres in Kraftfahrzeugen installiert werden kann, so dass den Abnehmern optimal gewärmte und nicht zu lange warm gehaltene Speisen geliefert werden können.

## Patentansprüche

1. Vorrichtung zum Erwärmen von vorbereiteten Speisen, **dadurch gekennzeichnet, dass** sie mehrere unabhängig voneinander betreibbare mit Heizeinrichtungen versehene Ofenkammern (2) und mindestens eine Kühlkammer (1) aufweist, die mit einer Tür oder Klappe (3) verschließbar und aneinander angrenzend angeordnet sind, und dass zwischen der Kühlkammer (1) und der daran angrenzenden Ofenkammer (2) Hohlräume vorgesehen sind, durch die mit Hilfe von Gebläseeinrichtungen (6) Luft hindurchleitbar ist.

2. Vorrichtung nach Anspruch 1, **dadurch gekennzeichnet, dass** die Kammern (1, 2) nebeneinander angeordnet sind.

3. Vorrichtung nach Anspruch 1 oder 2, **dadurch gekennzeichnet, dass** sie drei Ofenkammern (2) aufweist.

4. Vorrichtung nach einem der Ansprüche 1 bis 3, **dadurch gekennzeichnet, dass** die Ofenkammern (2) einen beheizbaren Wärmetauscher (7) und ein Umluftgebläse (8) aufweisen.

5. Vorrichtung nach einem der Ansprüche 1 bis 4, **dadurch gekennzeichnet, dass** die Heizeinrichtungen für die Ofenkammern (2) einen keramischen, elektrisch beheizbaren Glühstift aufweisen und mit Dieselkraftstoff betreibbar sind.

6. Vorrichtung nach Anspruch 5, **dadurch gekennzeichnet, dass** die elektrische Heizleistung für den Glühstift unter Berücksichtigung von Betriebsparametern einstellbar ist.

7. Vorrichtung nach Anspruch 6, **dadurch gekennzeichnet, dass** Anfangstemperatur der Brennkammer, Luftfeuchte, Außentemperatur und/oder innerer Widerstand des Glühstifts berücksichtigt werden.

8. Vorrichtung nach einem der Ansprüche 1 bis 7, **dadurch gekennzeichnet, dass** die Heizeinrichtung mit einem Gebläse mit Frischluft versorgt wird und der Dieselkraftstoff mit einer Dosierpumpe zugeführt wird.

9. Vorrichtung nach Anspruch 8, **dadurch gekennzeichnet, dass** die Leistung der Heizeinrichtung durch Veränderung der Gebläsedrehzahl und/oder durch Pulsweitenmodulation der Dosierpumpe gesteuert oder geregelt wird.

10. Vorrichtung nach einem der Ansprüche 1 bis 9, **dadurch gekennzeichnet, dass** die Heizleistung aufgrund der zeitlichen Temperaturänderung im Innenraum der Ofenkammern geregelt wird.

11. Vorrichtung nach Anspruch 4, **dadurch gekennzeichnet, dass** das Umluftgebläse (8) ein Querstromlüfter ist.

12. Vorrichtung nach einem der Ansprüche 1 bis 11, **dadurch gekennzeichnet, dass** die Ofenkammern (2) gegeneinander isoliert sind.

13. Vorrichtung nach einem der Ansprüche 1 bis 12, **dadurch gekennzeichnet, dass** die Kammern (1, 2) mit Halterungen (4) für die Tabletts der Speisen (5) versehen sind.

14. Vorrichtung nach einem der Ansprüche 1 bis 13, **dadurch gekennzeichnet, dass** die Kammern (1, 2) mit Türkontaktschaltern versehen sind.

15. Vorrichtung nach einem der Ansprüche 1 bis 14, **dadurch gekennzeichnet, dass** sie einen Mikroprozessor aufweist.

16. Vorrichtung nach einem der Ansprüche 1 bis 15, **dadurch gekennzeichnet, dass** Sie Signallampen und/oder eine Flüssigkristallanzeige aufweist.

17. Vorrichtung nach Anspruch 16, **dadurch gekennzeichnet, dass** die Flüssigkristallanzeige eine Touchfunktion aufweist.

18. Vorrichtung nach einem der Ansprüche 1 bis 17, **dadurch gekennzeichnet, dass** sie mit Einrichtungen zum Aufzeichnen und Ausgeben der Betriebsdaten, insbesondere Temperaturverlauf und Türöffnungszeiten mit Datum und Uhrzeit, versehen ist.

## Claims

1. Apparatus for heating up prepared dishes, **characterised in that** it has a number of oven compartments (2), which can be operated independently of one another and are provided with heating devices, and at least one cooling compartment (1), which compartments can be closed with a door or flap (3) and are arranged so as to be adjacent to one another, and that cavities, through which air can be conducted with the aid of blower devices (6), are provided between the cooling compartment (1) and the oven compartment (2) adjacent thereto.

2. Apparatus according to claim 1, **characterised in that** the compartments (1, 2) are arranged next to one another.

3. Apparatus according to claim 1 or 2, **characterised in that** it has three oven compartments (2).

4. Apparatus according to one of claims 1 to 3, **characterised in that** the oven compartments (2) have a heatable heat-exchanger (7) and a recirculating-air blower (8) .

5. Apparatus according to one of claims 1 to 4, **characterised in that** the heating devices for the oven compartments (2) have a ceramic, electrically heatable glow pin and can be operated by means of diesel fuel.

6. Apparatus according to claim 5, **characterised in that** the electrical heating power for the glow pin can be set taking operating parameters into account.

7. Apparatus according to claim 6, **characterised in that** the initial temperature of the combustion chamber, the atmospheric humidity, the outside temperature and/or the internal resistance of the glow pin are taken into account.

8. Apparatus according to one of claims 1 to 7, **characterised in that** the heating apparatus is supplied with fresh air by means of a blower and the diesel fuel is fed in by means of a metering pump.

9. Apparatus according to claim 8, **characterised in that** the power of the heating device is controlled or regulated by varying the rotational speed of the blower and/or by pulse-width modulation of the metering pump.

10. Apparatus according to one of claims 1 to 9, **characterised in that** the heating power is regulated on the basis of the temperature-change in the interior of the oven compartments per unit of time.

11. Apparatus according to claim 4 **characterised in that** the recirculating-air blower (8) is a cross-flow fan.

12. Apparatus according to one of claims 1 to 11, **characterised in that** the oven compartments (2) are insulated from one another.

13. Apparatus according to one of claims 1 to 12, **characterised in that** the compartments (1, 2) are provided with holding arrangements (4) for the trays of dishes (5) .

14. Apparatus according to one of claims 1 to 13, **characterised in that** the compartments (1, 2) are provided with door contact switches.

15. Apparatus according to one of claims 1 to 14, **characterised in that** it has a microprocessor.

16. Apparatus according to one of claims 1 to 15, **characterised in that** it has indicating lamps and/or a liquid crystal display.

17. Apparatus according to claim 16, **characterised in that** the liquid crystal display has a touch function.

18. Apparatus according to one of claims 1 to 17, **characterised in that** it is provided with devices for recording and outputting the operating data, in particular the temperature profile and door-opening times with date and time.

## Revendications

1. Dispositif pour chauffer des plats préparés, **caractérisé en ce qu'**il présente plusieurs compartiments de four (2), exploitables indépendamment les uns des autres et munis de dispositifs de chauffage, et au moins un compartiment réfrigérant (1), qui peuvent être fermés par une porte ou un volet (3) et sont disposés les uns à côté des autres, et **en ce qu'**entre le compartiment réfrigérant (1) et le compartiment de four (2) adjacent à celui-ci, des espaces sont prévus à travers lesquels de l'air peut être amené à passer à l'aide de dispositifs de soufflerie (6).

2. Dispositif selon la revendication 1, **caractérisé en ce que** les compartiments (1, 2) sont disposés côte à côte.

3. Dispositif selon la revendication 1 ou 2, **caractérisé en ce qu'**il présente trois compartiments de four (2).

4. Dispositif selon l'une quelconque des revendications 1 à 3, **caractérisé en ce que** les compartiments de four (2) présentent des échangeurs thermiques (7) chauffants et un ventilateur de recirculation (8).

5. Dispositif selon l'une quelconque des revendications 1 à 4, **caractérisé en ce que** les dispositifs de chauffage présentent pour les compartiments de four (2) un point de préchauffage céramique, à chauffage électrique, et peuvent fonctionner avec un carburant diesel.

6. Dispositif selon la revendication 5, **caractérisé en ce que** la puissance de chauffage électrique pour le point de préchauffage peut être réglée en tenant compte de paramètres d'exploitation.

7. Dispositif selon la revendication 6, **caractérisé en ce que** la température initiale de la chambre de combustion, l'humidité de l'air, la température extérieure et/ou la résistance intérieure du point de préchauffage sont prises en compte.

8. Dispositif selon l'une quelconque des revendications 1 à 7, **caractérisé en ce que** le dispositif de chauffage est alimenté en air frais par un ventilateur et le carburant diesel est amené par une pompe de dosage.

9. Dispositif selon la revendication 8, **caractérisé en ce que** la puissance du dispositif de chauffage est commandée ou régulée par une modification du régime de ventilateur et/ou par une modulation d'impulsions en largeur de la pompe de dosage.

10. Dispositif selon l'une quelconque des revendications 1 à 9, **caractérisé en ce que** la puissance de chauffage est régulée sur la base de la variation de température dans le temps à l'intérieur des compartiments de four.

11. Dispositif selon la revendication 4, **caractérisé en ce que** le ventilateur de recirculation (8) est un ventilateur à courant transversal.

12. Dispositif selon l'une quelconque des revendications 1 à 11, **caractérisé en ce que** les compartiments de four (2) sont isolés les uns par rapport aux autres.

13. Dispositif selon l'une quelconque des revendications 1 à 12, **caractérisé en ce que** les compartiments (1,2) sont munis de supports (4) pour les plateaux des plats (5).

14. Dispositif selon l'une quelconque des revendications 1 à 13, **caractérisé en ce que** les compartiments (1, 2) sont munis de contacteurs de porte.

15. Dispositif selon l'une quelconque des revendications 1 à 14, **caractérisé en ce qu'**il présente un microprocesseur.

16. Dispositif selon l'une quelconque des revendications 1 à 15, **caractérisé en ce qu'**il présente des témoins lumineux et/ou un affichage à cristaux liquides.

17. Dispositif selon la revendication 16, **caractérisé en ce que** l'affichage à cristaux liquides présente une fonction tactile.

18. Dispositif selon l'une quelconque des revendications 1 à 17, **caractérisé en ce qu'**il est muni de dispositifs pour enregistrer et délivrer les données d'exploitation, en particulier le gradient de température et les temps d'ouverture des portes avec la date et l'heure.
